# EUROPEAN PATENT SPECIFICATION

(11) **EP 1 990 234 B1**
(45) Date of publication and mention of the grant of the patent: **30.12.2009**
(21) Application number: 07108085.7
(22) Date of filing: 11.05.2007
(51) Int. Cl.: B60N 2/44

(54) **Integrated sleeping support device for car seats**
Integrierte, schlafunterstützende Vorrichtung für Fahrzeugsitze
Dispositif d'assistance au couchage intégré pour les sièges de voitures

(43) Date of publication of application: 12.11.2008
(73) Proprietor: Ford Global Technologies, LLC, Dearborn, MI 48126 (US)
(72) Inventor: Carlund, Hans, 426 72 Västra Frölunda (SE); Bell, Anders, 430 33 Fjärås (SE); Knutsson, David, 302 46 Halmstad (SE); Håkansson, Pontus, 417 26 Göteborg (SE)
(74) Representative: Olsson, Stefan

(56) References cited:
- FR-A- 2 760 701
- US-A- 5 330 255

## Description

### TECHNICAL FIELD

The present inventions relates to a sleeping support device for a passenger in a car seat, said seat comprising a seat portion and a backrest and is provided with safety belts.

### BACKGROUND ART

When passengers sleep during car rides they often due to lack of a convenient support for the head slide down in the seat and sit in position which is un-safe with regards to the geometry of an applied safety belt. This is especially true for children. Due to lack of understanding or during sleep they often slide down to positions which are extremely dangerous in case of a car accident.

In addition, due to its heavy weight the head is often fallen aside to an uncomfortable and dangerous position when the passenger is sleeping. When a child falls asleep in a conventional car seat it is very common that they fall out of the safety belts correct position. Even at low speed the consequences would be devastating.

It exist products on the market which are intended to solve these problems. Earlier known products are however far from satisfactory. Separate child safety seat which are intended to be fastened in the ordinary car seat exist which when applied gives protection of the heads for small children up to about 3 years age. The problems with them are that they are in the way when they are not used and if they are not mounted they might be out reach when needed. An example of a product of this type is known from US 6 206 470 B1.

US 5 904 405 shows a head cushion with fixed side support for the head, which side supports extend in a direction transverse to the main head cushion. One obvious drawback is that the side supports are in the way when the passenger enters and leaves the seat. A further serious drawback is that this solution is mainly useful for adults.

Document US 5330255, which discloses all the features of the preamble of claim 1, is considered to be the closest prior art.

It exist solutions for very small children as mentioned above, i.e. separate child safety seat. For larger children above about three years age there exist in the prior art no head support device which prevents a sleeping child's head from falling aside to an inconvenient and in case of an accident very dangerous position.

There is therefore a great demand for a device which allows especially a child to sleep in a car seat with his head supported in a correct position and which device also is immediately accessible for use and out of the way when not in use.

### DISCLOSURE OF INVENTION

The above mentioned problems have been eliminated by the present invention.

The invention is mainly characterised in that at least two inflatable pillows are integrated in the backrest, in that each of said pillows before and after use is arranged in a compressed inactive position in a module located within the backrest, in that first means is arranged to inflate the pillows to a use position with one pillow extending from a front-side of the backrest on each side of the head of a passenger sitting in the seat in correct position in relation to the safety belts, in that after use of said pillows second means are arranged to draw back the pillows to said inactive position and third means is arranged to allow the air inside the pillows to escape when the pillows are drawn back from said use position to said inactive position, in that operating buttons are arranged to allow the driver and/or passenger to control said first, second and third means for bringing said pillows from inactive position to use position and vice versa.

An embodiment of the invention intended for children is characterized in that the device is combined with a seat cushion adapted in size to lift the child in correct position with regards to the seat belts.

In a preferred modified embodiment said seat cushion is integrated in the seat.

In a further modified embodiment said seat cushion can be arranged in at least two height position for adaptation to children in different size range.

Another embodiment intended for children of age between about 4 to 12 years is characterized in that the device is combined with a seat cushion adapted to children within a length range of about 100 to 135 cm and in that the length of the inflated pillows in the height direction of the backrest is at least about 20 cm.

Further embodiments of the invention are included in the accompanying patent claims.

### BRIEF DESCRIPTION OF DRAWINGS

An embodiment of the invention will now be described, by way of example, with reference to the accompanying drawings, in which:
Figure 1 is a perspective view of a back seat with the sleeping support device in accordance with the invention in an inactive position.
Figure 2 shows the back seat in accordance with figure 1 with the sleeping support device in accordance with the invention in use position.

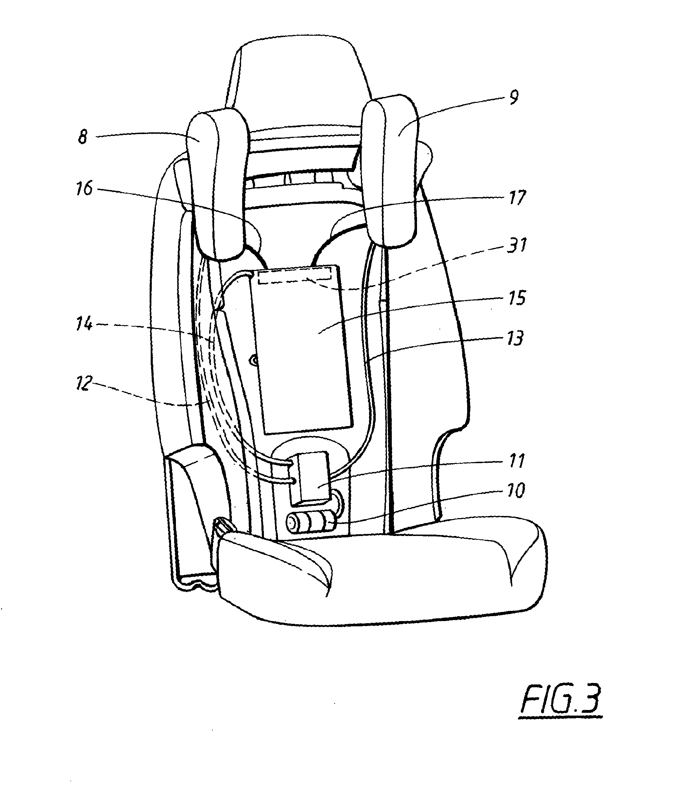

Figure 3 shows the back seat in accordance with figure 2 and with the front of the backrest taken away for illustrative purpose to show details of device in accordance with the invention.
Figure 4 is a schematic perspective view for illustrating details of a tread arrangement in the inflatable pillows.
Figures 5-8 illustrate by way of example a draw device for draw back the pillows via treads from use position to the inactive position.

### DESCRIPTION OF AN EMBODIMENT OF THE INVENTION

The car seat 1 includes a seat portion 2, a backrest 3 and a head cushion 4. A conventional lock mechanism 5 for a safety belt is integrated in the car seat. The safety belts is of a normal well known type used today and is not shown in the drawings.

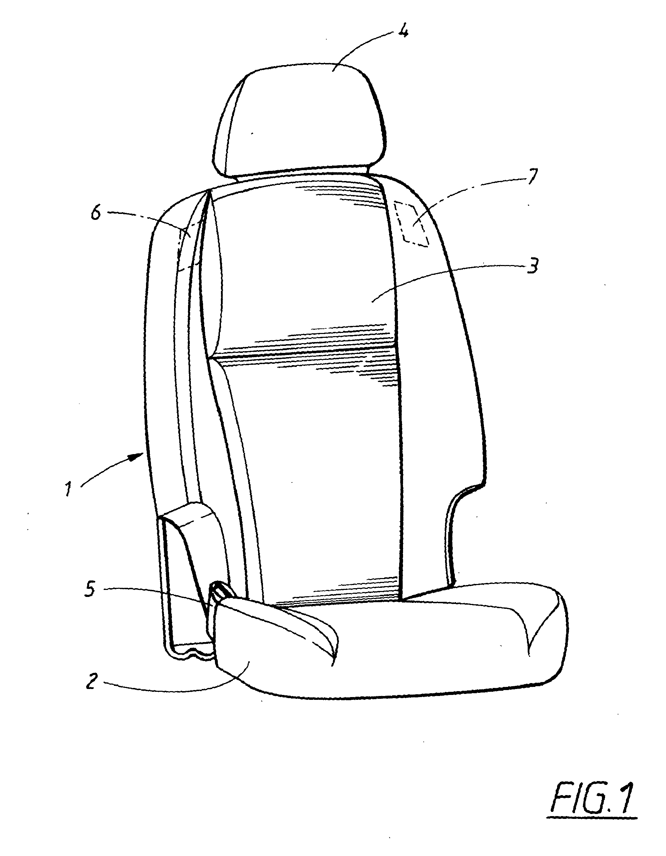

The car seat includes a sleeping support device which is fully integrated in the backseat. Said sleeping support device includes inflatable pillows. In figure 1 the pillows are in a retracted inactive position totally inside the car seat, i.e. they are out the way when not used. In figure 1 two lids 6, 7, one on each side of the backrest, are shown schematically with dotted lines. When the pillows are inflated the lids will open for the expanding pillows. When the pillows have been drawn back from use position to inactive position within the backrest, the lids will automatically close for instance through the action of a spring (not shown).

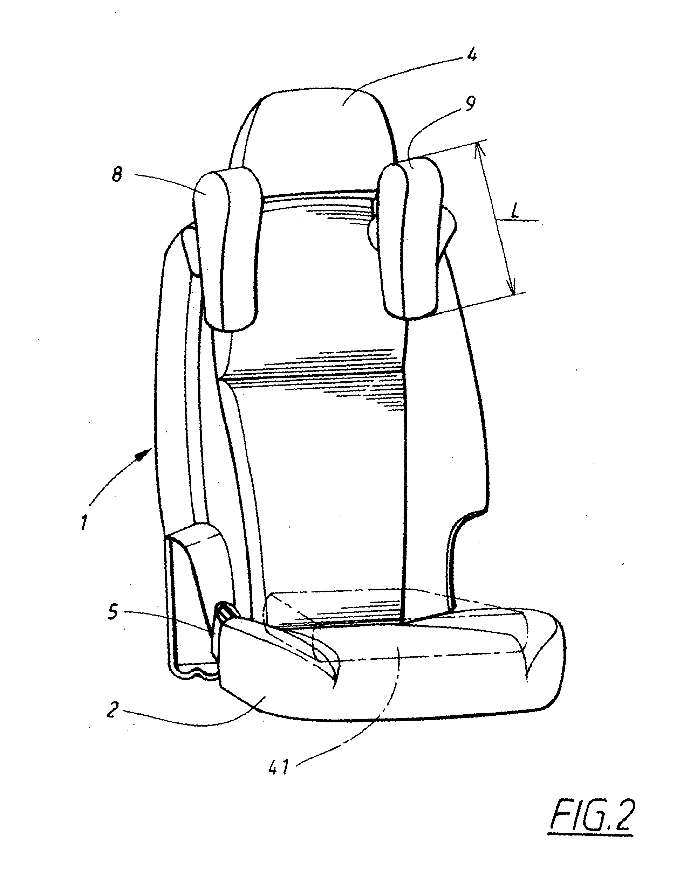

In figure 2 the pillows 8, 9 are shown in inflated use position, with one pillow extending from each side of the backrest. The purpose with the pillows is to support the head of a passenger sitting in the chair and prevent the head from falling aside to a position which is dangerous in case of a car incident.

It is important for the proper function of the pillows that they in use position are adapted to the geometry of the safety belts, i.e. when the passenger is in correct position in relation to a fastened safety belt the head of the passenger should be supported from both sides. Critical for the proper function of the pillows 8, 9 is that at least the temples of the passengers head will be supported by the pillows. The pillows must therefore have a sufficient length L to fit passengers of different length.

The primary object of the present invention is to offer a safe sleeping support for children of age between about 4-12 years and with a length between about 100 to135 cm. For children of this size it is necessary to have child restraints for safe function of the seat belts.

For children of said sizes the device in accordance with the invention is intended to be used together with seat cushions that lift the child in relation to the seat belts. It is important to raise the seating position of the child so that the adult seat belt lies properly across the chest and low across the pelvis of the child. In a preferred embodiment a seat cushion are integrated in the car seat and foldable from the seat to use position when needed. A specific integrated seat cushion is not described. Different solutions are possible and well known for a person skilled in the art. It is possible to use the sleeping support device in accordance with the invention in combination with separate seat cushions which are placed in the car seat. A separate seat cushion 41 is schematically indicated in figure 2.

Tests have been performed to measure the height of the temples of children in the above mentioned size range above the car seat when respective child is placed in booster cushion of proper size in relation to safe belts. The result of the tests shows that the length L of the pillows should be at least about 20 cm to fit all children within said range, i.e. so that the temples of the children always are covered by a part of the pillows.

The device in accordance with the invention includes an air pump 10 which is controlled by signals activated through operating buttons (not shown), which are arranged in one set for the driver and in one further set for the passenger. The driver's operating buttons may include a lock button arranged to inactivate the function of the passenger's operating button.

The air pump 10 delivers a pressure to the valve system 11 which delivers air pressure via the conduits 12, 13 for inflating the pillows 8 and 9 from their inactive position to fully extended, in use position. The valve system can be constructed in different ways with conventional pneumatic means. It may for instance include solenoid valves.

In a preferred embodiment, and in particular for pillows intended for children in the above mentioned range, i.e. of an age between about 4 to12 years, the sleeping support device in accordance with the invention is arranged such that the pillows can only have two different position either retracted within modules within the backrest or in a fixed inflated size. This is important in order to avoid that the cushion are inflated to an improper size which gives inadequate support for the head of the user.

A further air conduit 14 is arranged between the valve system and a draw device 15, which is arranged to draw the pillows from use position to retracted inactive position via treads running in tubes. The function of the draw device will be further explained below.

The pillows are in when in inactive position fully retracted within modules 40 which are integrated within the backrest of car seat behind the lid 6 and 7.

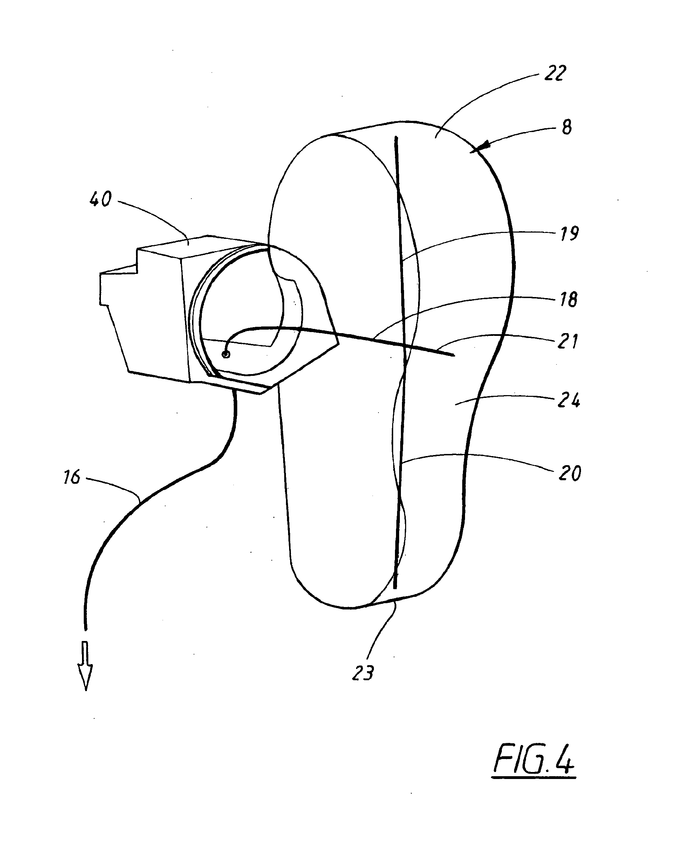

In figure 4 the pillow 8 is schematically shown in its inflated use position. A cord 18 is with one of its end connected to the draw device 15. Within the pillow the cord 18 is divided in three cord parts 19, 20 and 21. The ends of the cord parts are connected to different points of the shell 22 of the pillow 8. The end of the cord part 19 is connected to a point of the shell at the upper end of the inflated shell. The end of the cord part 20 is connected to a point at the lower end of the inflated shell. The end of the cord part 21 is connected with a point at the front side 24 of the shell. The material of the shell must be tough and durable to withstand repeated use under several years. The material of the can for instance be polyurethane.

When the cord 18 is drawn by the draw device through the tube 16 in direction of the arrow in figure 4 the cord parts 19, 20 and 21 will draw the pillow from its use position back to its inactive position within the module 17. When the driver or passenger press an operating button, marked for instance as "Pillows down" the draw device is activated and the air is evacuated from the pillows via the valve system 11.

The draw device 15 includes an airtight box 30 inside which a bellow 31 is arranged. The cords 18 from respective pillows run through the tubes 16 and 17. The ends of the cords 18 are fastened at the lowest fold 32 of the bellows and runs freely through the rest of the folds of the bellows.

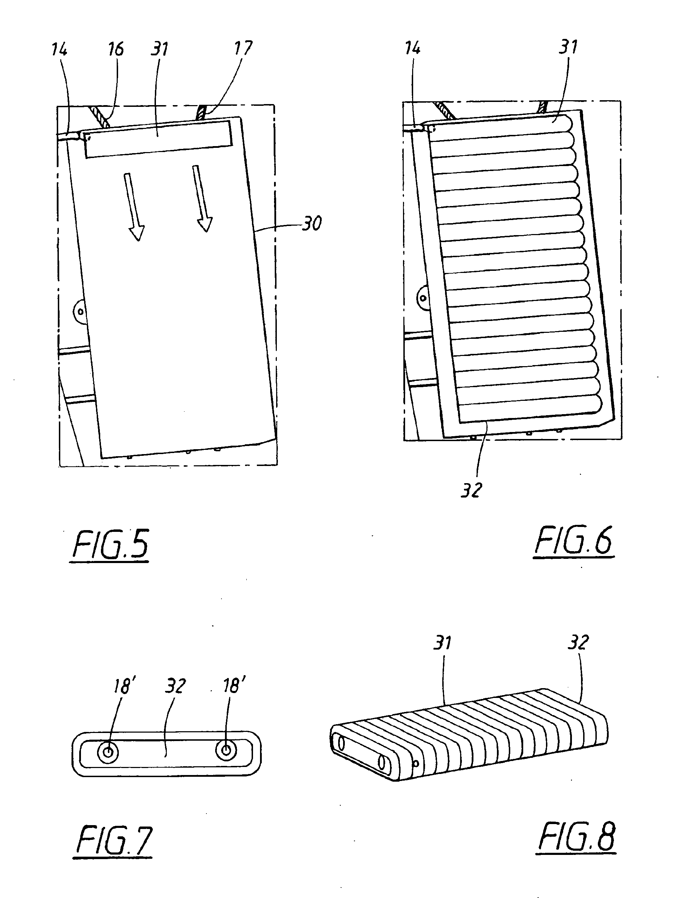

When the pillows 8 and 9 are in inflated use position the air in the bellows is evacuated and the bellow is in the position as shown in figure 5.

For bringing the pillows back to its retracted position within the backseat the driver or passenger press an operating button which activates the air pump 10 and controls the valve system so that air pressure is delivered via the conduit 14 to the bellows and the air inside the pillows is evacuated. When the bellows is inflated it expands downwards in the direction of the arrows in figure 5 to its fully extended state which is shown in figure 6. The cords 18 are at the same time drawn downwards by the bellows and the pillows are drawn back to inactive position within the backrest as described in connection with figure 4.

The present invention is not limited to the above described embodiment but various modifications are possible within the scope of the following claims.

For instance can the sleeping support device include two pillows on each side of the backrest arranged in different modules within the backrest, which modules are arranged on different height above the seat portion. The lower pair of pillows is intended for children and the upper pair of pillows for adults.

The sleeping support device may be connected to the ignition switch and/or to a seat belt sensor in order to automatically draw the pillows to inactive position within the backrest when the engine is turned off and/or when the seat belt is unfasted.

## Claims

1. A car seat (1) with a sleeping support device for a passenger in said seat comprising a seat portion (2) and a backrest (3) and is provided with seat belts, and with at least two inflatable pillows (8,9) integrated in the backrest (3), **characterized in that** each of said pillows before and after use is arranged in a compressed inactive position in a module (40) located within the backrest, **in that** first means is arranged to inflate the pillows to a use position with one pillow (8,9) extending from a front-side of the backrest on each side of the head of a passenger sitting in the seat in correct position in relation to the seat belts, **in that** after use of said pillows (8,9) second means are arranged to draw back the pillows to said inactive position and third means is arranged to allow the air inside the pillows to escape when the pillows are drawn back from said use position to said inactive position, **in that** operating buttons are arranged to allow the driver and/or passenger to control said first, second and third means for bringing said pillows from inactive position to use position and vice versa.

2. A car seat in accordance with claim 1 and intended for children, **characterized in that** the device is combined with a seat cushion (41) adapted in size to lift the child in correct position with regards to the seat belts.

3. A car seat in accordance with claim 2, **characterized in that** said seat cushion (41) is integrated in the seat (1).

4. A car seat in accordance with claim 3, **characterized in that** said seat cushion (41) can be arranged in at least two height position for adaptation to children in different size range.

5. A car seat in accordance to any of claims 2-4, **characterized in that** the device is combined with a seat cushion adapted to children within a length range of about 100 to 135 cm and **in that** the length (L) of the inflated pillows in the height direction of the backrest is at least about 20 cm.

6. A car seat according to any of the preceding claims **characterized in that** first means comprises an air pump (10) and a valve system (11).

7. A car seat according to claim 6, **characterized in that** said valve system (11) includes solenoid valves.

8. A car seat according to claim 7, **characterized in that** operating buttons are arranged both for the driver and for a passenger sitting in a seat provided with said pillows and **in that** the driver's operating buttons includes a lock button arranged to inactivate the function of the passenger's operating buttons.

9. A car seat according to any one of the preceding claims, **characterized in that** each pillows (8,9) in its compressed inactive position is arranged in separate modules (17) located in the backrest (2).

10. A car seat according to claim **characterized in that** a module (40) is arranged on each side of the backrest (2), **in that** each module comprises at least two pillows (7,8), which have different form, size and extension direction in use position for the adaptation to users of different size and which are arranged to be inflated to use position independently and separately, **in that** said operating buttons includes buttons for choosing one of the separate pillows on each side of the backrest.

11. A car seat according to claim 1 , **characterized in that** the device comprises one module (40) for adults on each side of the backrest and also one module (40) for children on each side of the backrest (2).

12. A car seat according to claim 10, **characterized in that** said modules (40) includes at least one pillow for children and at least one pillow for adults.

13. A car seat according to claim 11 or 12, **characterized in** said operating buttons comprises separate buttons for an adult and for a child.

14. A car seat according to any one of the preceding claims, **characterized in that** said module(s) are arranged in the backrest inside a lid (6,7).

15. A car seat according to any of the preceding claims, **characterized in that** the shell (22) of the inflatable pillows (8,9) includes a layer of plastic, such as polyurethane.

16. A car seat according to any of the preceding claims, **characterized in that** said second means includes cords (18), treads or bands and a draw device (31), which cords, threads or bands are connected between several different points of the shell (22), inside each pillow shell, and the draw device.

## Patentansprüche

1. Fahrzeugsitz (1) mit einer Schlafunterstützungsvorrichtung für einen Fahrgast, wobei der Sitz einen Sitzabschnitt (2) und eine Rückenlehne (3) umfasst und mit Sitzgurten und mit zumindest zwei in der Rückenlehne ((3) integrierten, aufblasbaren Kissen (8, 9) versehen ist,
**dadurch gekennzeichnet, dass**
jedes der Kissen vor und nach einer Verwendung in einer komprimierten, inaktiven Position in einem innerhalb der Rückenlehne gelegenen Modul (40) angeordnet ist, **dadurch**, dass ein erstes Mittel die Kissen in eine Verwendungsposition aufblasen kann, wobei sich ein Kissen (8, 9) von einer Vorderseite der Rückenlehne an jeder Seite des Kopfes eines im Sitz in einer korrekten Position in Bezug auf die Sitzgurte sitzenden Fahrgastes erstreckt, **dadurch**, dass nach einer Verwendung der Kissen (8, 9) ein zweites Mittel die Kissen in die inaktive Position zurück ziehen kann und ein drittes Mittel innerhalb der Kissen befindliche Luft austreten lassen kann, wenn die Kissen von der Verwendungsposition zur inaktiven Position zurück gezogen wurden, **dadurch**, dass Betriebsknöpfe es dem Fahrer und/ oder Fahrgast gestatten können, das erste, zweite und dritte Mittel zu steuern, um die Kissen von einer inaktiven Position in eine Verwendungsposition zu bringen, und umgekehrt.

2. Fahrzeugsitz gemäß Anspruch 1 und für Kinder gedacht, **dadurch gekennzeichnet, dass** die Vorrichtung mit einem Sitzpolster (41) kombiniert ist, das größenmäßig eingerichtet ist, ein Kind bezüglich der Sitzgurte in eine korrekte Position zu heben.

3. Fahrzeugsitz gemäß Anspruch 2, **dadurch gekennzeichnet, dass** das Sitzpolster (41) in den Sitz (1) integriert ist.

4. Fahrzeugsitz gemäß Anspruch 3, **dadurch gekennzeichnet, dass** das Sitzpolster (41) in zumindest zwei Höhenpositionen zur Anpassung an Kinder in unterschiedlichen Größenbereichen angeordnet sein kann.

5. Fahrzeugsitz gemäß einem der Ansprüche 2 bis 4, **dadurch gekennzeichnet, dass** die Vorrichtung mit einem Sitzpolster kombiniert ist, das auf Kinder innerhalb eines Längenbereichs von 100 bis 135 cm angepasst ist, und **dadurch**, dass die Länge (L) der aufgeblasenen Kissen in der Höhenrichtung der Rückenlehne zumindest 20 cm beträgt.

6. Fahrzeugsitz gemäß einem der vorangegangenen Ansprüche, **dadurch gekennzeichnet, dass** das erste Mittel eine Luftpumpe (10) und ein Ventilsystem (11) umfasst.

7. Fahrzeugsitz gemäß Anspruch 6, **dadurch gekennzeichnet, dass** das Ventilsystem (11) Magnetventile aufweist.

8. Fahrzeugsitz gemäß Anspruch 7, **dadurch gekennzeichnet, dass** Betriebsknöpfe sowohl für den Fahrer als auch einen in einem mit den Kissen versehenen Sitz sitzenden Fahrgast angeordnet ist, und **dadurch**, dass die Fahrerbetriebsknöpfe einen Verriegelungsknopf aufweisen, der die Funktion der Fahrgastbetriebsknöpfe deaktivieren kann.

9. Fahrzeugsitz gemäß einem der vorangegangenen Ansprüche, **dadurch gekennzeichnet, dass** jedes Kissen (8, 9) in seiner komprimierten, inaktiven Position in separaten, in der Rückenlehne (2) gelegenen Modulen (17) angeordnet ist.

10. Fahrzeugsitz gemäß Anspruch 1, **dadurch gekennzeichnet, dass** ein Modul (40) an jeder Seite der Rückenlehne (2) angeordnet ist, und **dadurch**, dass jedes Modul zumindest zwei Kissen (7, 8) umfasst, die in einer Verwendungsposition unterschiedliche Gestalt, Größe und Erstreckungsrichtung zur Anpassung an Verwender unterschiedlicher Größen haben, und die unabhängig und separat in eine Verwendungsposition aufgeblasen werden können, **dadurch**, dass die Betriebsknöpfe Knöpfe aufweisen, um eines der separaten Kissen an jeder Seite der Rückenlehne auswählen zu können.

11. Fahrzeugsitz gemäß Anspruch 1, **dadurch gekennzeichnet, dass** die Vorrichtung ein Modul (40) für Erwachsene an jeder Seite der Rückenlehne und ebenso ein Modul für Kinder an jeder Seite der Rückenlehne (2) umfasst.

12. Fahrzeugsitz gemäß Anspruch 10, **dadurch gekennzeichnet, dass** die Module (40) zumindest ein Kissen für Kinder und zumindest ein Kissen für Erwachsene umfassen.

13. Fahrzeugsitz gemäß Anspruch 11 oder 12, **dadurch gekennzeichnet, dass** die Betriebsknöpfe separate Knöpfe für einen Erwachsenen und ein Kind umfassen.

14. Fahrzeugsitz gemäß einem der vorangegangenen Ansprüche, **dadurch gekennzeichnet, dass** das Modul/die Module in der Rückenlehne innerhalb eines Deckels (6, 7) angeordnet ist/sind.

15. Fahrzeugsitz gemäß einem der vorangegangenen Ansprüche, **dadurch gekennzeichnet, dass** die Hülle (22) des aufblasbaren Kissens (8, 9) eine Schicht aus Plastik, wie z.B. Polyurethan, aufweist.

16. Fahrzeugsitz gemäß einem der vorangegangenen Ansprüche, **dadurch gekennzeichnet, dass** das zweite Mittel Seile (18), Stränge oder Bänder und eine Zugvorrichtung (31) aufweist, welche Seile (18), Stränge oder Bänder zwischen mehreren unterschiedlichen Punkten der Hülle (22) innerhalb jeder Kissenhülle und der Zugvorrichtung verbunden sind.

## Revendications

1. Siège de voiture (1) pourvu d'un dispositif de support de couchage pour un passager, ledit siège comprenant une partie de siège (2) et un dossier (3) et étant muni de ceintures de sécurité, et d'au moins deux coussins gonflables (8, 9) intégrés au dossier (3), **caractérisé en ce que** chacun desdits coussins avant et après utilisation est disposé en position inactive comprimée dans un module (40) placé à l'intérieur du dossier, **en ce que** des premiers moyens sont aménagés pour gonfler les coussins en position d'utilisation avec un coussin (8, 9) s'étendant d'un côté avant du dossier de chaque côté de la tête d'un passager assis sur le siège en position correcte par rapport aux ceintures de sécurité, **en ce qu'**après utilisation desdits coussins (8, 9) des deuxièmes moyens sont aménagés pour ramener les coussins dans ladite position inactive et des troisièmes moyens sont mis en oeuvre pour permettre à l'air contenu à l'intérieur des coussins de s'échapper lorsque les coussins sont ramenés de ladite position d'utilisation à ladite position inactive, **en ce que** des boutons d'actionnement sont disposés pour permettre au conducteur et/ou au passager de commander lesdits premiers, deuxièmes et troisièmes moyens afin d'amener lesdits coussins d'une position inactive à une position d'utilisation et vice versa.

2. Siège de voiture selon la revendication 1 et destiné aux enfants, **caractérisé en ce que** le dispositif est combiné avec un coussin de siège (41) à la taille adaptée pour soulever l'enfant en position correcte par rapport aux ceintures de sécurité.

3. Siège de voiture selon la revendication 2, **caractérisé en ce que** ledit coussin de siège (41) est intégré au siège (1).

4. Siège de voiture selon la revendication 3, **caractérisé en ce que** ledit coussin de siège (41) peut être disposé dans au moins deux positions en hauteur pour s'adapter aux enfants de différentes tailles.

5. Siège de voiture selon l'une quelconque des revendications 2 à 4, **caractérisé en ce que** le dispositif est combiné à un coussin de siège adapté aux enfants dans une plage de tailles d'environ 100 à 135 cm et **en ce que** la longueur (L) des coussins gonflés dans le sens de la hauteur du dossier est d'au moins environ 20 cm.

6. Siège de voiture selon l'une quelconque des revendications précédentes, **caractérisé en ce que** les premiers moyens comprennent une pompe à air (10) et un système de soupapes (11).

7. Siège de voiture selon la revendication 6,
**caractérisé en ce que** ledit système de soupapes (11) comprend des électrovannes.

8. Siège de voiture selon la revendication 7, **caractérisé en ce que** les boutons d'actionnement sont disposés à la fois pour le conducteur et pour un passager assis sur un siège équipé desdits coussins et **en ce que** les boutons d'actionnement du conducteur comprennent un bouton de verrouillage disposé pour inactiver la fonction des boutons d'actionnement du passager.

9. Siège de voiture selon l'une quelconque des revendications précédentes, **caractérisé en ce que** chacun des coussins (8, 9) dans sa position inactive comprimée est aménagé dans des modules séparés (17) placés dans le dossier (2).

10. Siège de voiture selon la revendication 1,
**caractérisé en ce qu'**un module (40) est aménagé de chaque côté du dossier (2), **en ce que** chaque module comprend au moins deux coussins (7, 8), qui ont une forme, une taille et une direction d'extension différentes en position d'utilisation pour s'adapter à des utilisateurs de différentes tailles et qui sont aménagés pour être gonflés en position d'utilisation de manière indépendante et séparée, et **en ce que** lesdits boutons d'actionnement comprennent des boutons pour choisir l'un des coussins séparés de chaque côté du dossier.

11. Siège de voiture selon la revendication 1,
**caractérisé en ce que** le dispositif comprend un module (40) pour adultes de chaque côté du dossier et également un module (40) pour enfants de chaque côté du dossier (2).

12. Siège de voiture selon la revendication 10, **caractérisé en ce que** lesdits modules (40) comprennent au moins un coussin pour enfants et au moins un coussin pour adultes.

13. Siège de voiture selon la revendication 11 ou 12, **caractérisé en ce que** lesdits boutons d'actionnement comprennent des boutons séparés pour un adulte et pour un enfant.

14. Siège de voiture selon l'une quelconque des revendications précédentes, **caractérisé en ce que** le ou lesdits modules est ou sont aménagés dans le dossier, à l'intérieur d'un couvercle (6, 7).

15. Siège de voiture selon l'une quelconque des revendications précédentes, **caractérisé en ce que** l'enveloppe (22) des coussins gonflables (8, 9) comprend une couche de plastique, tel que du polyuréthanne.

16. Siège de voiture selon l'une quelconque des revendications précédentes, **caractérisé en ce que** lesdits deuxièmes moyens comprennent des cordes (18), des filets ou des bandes et un dispositif de traction (31), les cordes, filets ou bandes étant raccordés entre plusieurs points différents de l'enveloppe (22), à l'intérieur de chaque enveloppe de coussin, et le dispositif de traction.
